**Europäisches Patentamt**

(19) **European Patent Office**

**Office européen des brevets**

(11) Numéro de publication: **0170578 B1**

(12) **FASCICULE DE BREVET EUROPEEN**

(45) Date de publication du fascicule du brevet: **18.01.89**

(21) Numéro de dépôt: **85401378.6**

(22) Date de dépôt: **08.07.85**

(51) Int. Cl.⁴: **C 01 B 33/143, C 01 B 33/193**

(54) Procédés pour l'obtention de colioides de silice et silices spheriques.

(30) Priorité: **11.07.84 FR 8411003**

(43) Date de publication de la demande:
**05.02.86 Bulletin 86/6**

(45) Mention de la délivrance du brevet:
**18.01.89 Bulletin 89/3**

(84) Etats contractants désignés:
**AT BE CH DE FR GB IT LI LU NL SE**

(56) Documents cités:
**FR-A- 1 054 175**
**GB-A- 1 044 019**
**US-A- 2 731 326**

(73) Titulaire: **RHONE-POULENC CHIMIE, 25, quai Paul Doumer, F-92408 Courbevoie Cédex (FR)**

(72) Inventeur: **Chevallier, Yvonick, 19, allée des Géraniums, F-69150 Decines (FR)**

(74) Mandataire: **Dubruc, Philippe et al, RHONE-POULENC INTERSERVICES Service Brevets Chimie 25, quai Paul-Doumer, F-92408 Courbevoie Cédex (FR)**

## Description

La présente invention a trait au procédé d'obtention de colloïde de silice.

On sait que, d'une manière générale, la précipitation de la silice correspond à un ensemble complexe de phénomènes qui met en jeu plusieurs actes chimiques et notamment une polycondensation et un phénomène de floculation, ces deux actes entrant volontiers en compétition.

Par ailleurs, on sait que le vocable silice précipitée recouvre un produit dont la morphologie est variable, en prenant en compte simplement les particules ultimes ou billes élémentaires telles que l'on peut les apprécier au microscope électronique. (selon Ralph K. ILER – The Chemistry of Silica – John WILEY & Sons (1979) p. 465).

Ces billes peuvent varier en taille. Elles peuvent conduire à des états d'association différents sous forme d'agrégats (tels que définis par Ralph K. ILER – p. 477) et d'ensemble à liaisons plus faibles, ce qui conduit à une grande diversité de morphologies de type amorphes. Les agrégats peuvent être caractérisés en particulier par leur taille, leur facteur de forme et leur surface.

Il existe ainsi non une silice mais une infinité de silices dont le comportement ne peut pas être prévu, d'autant que la chimie de surface est une autre caractéristique importante.

Lors de l'obtention de ces silices, il est possible de faire intervenir un grand nombre de paramètres, tels que concentrations en divers réactifs pH, temps, température, etc. . .

Or, depuis longtemps, on a cherché à isoler les divers actes chimiques.

Ainsi, dès 1951, dans l'US 2 731 326, il est enseigné de former d'abord un sol par addition d'une solution d'acide sulfurique à une solution de silicate, puis de chauffer le sol afin d'accroître la taille des particules jusqu'à 5 à 7 nm.

Enfin, il est procédé à une addition simultanée d'une solution d'acide et d'une solution de silicate à pH constant, de sorte à réaliser la précipitation et à déposer le reste de la silice sur le précipité (Ralph K. ILER – p. 558).

Dans le même esprit, dans les US 3 954 944 et 4 127 641, on procède à une addition simultanée d'acide sulfurique et de solution de silicate sur un pied de cuve aqueux avec obtention d'un sol, mûrissement du sol, floculation du sol avec introduction d'un électrolyte alcalin, mûrissement du produit de floculation, addition complémentaire d'acide seul ou d'acide et de silicate.

On voit que le mode opératoire est complexe, surtout au regard des propriétés de produits décrits qui restent difficiles à apprécier.

Ainsi, d'une manière générale, en dépit d'efforts importants réalisés depuis longtemps, on n'est pas parvenu, jusqu'à ce jour, à proposer un procédé permettant d'isoler les actes chimiques et surtout à les contrôler, même au niveau du colloïde de départ.

Or, maintenant, on a trouvé, et c'est ce qui fait l'objet de la présente invention, un nouveau procédé d'obtention d'un colloïde de silice.

Le procédé selon l'invention consiste à faire réagir une solution d'un silicate alcalin avec un agent acidifiant en formant un pied de cuve renfermant une substance aqueuse par addition simultanée d'un agent acidifiant et de la sulution de silicate alcalin et se caractérisé par le fait que l'on réalise cette addition à volume constant des réactifs et soutirage en continu du milieu de réaction et en maintenant une concentration en silice dans le milieu de réaction telle que l'agglomération de particules colloïdales soit évitée.

De manière inattendue, la demanderesse a observé que l'on dispose ainsi, dans le volume constant, d'un colloïde sphérique monodisperse en taille de diamètre et dans le soutirage d'un colloïde de silice polydisperse en taille de diamètre.

Par colloïde, on entendra ici des sols consistant en fines particules à très faible agrégation selon la définition donnée par ILER – p. 415, la polydispersité étant appréhendée de façon connue (voir MYSELS – Introduction to Colloïd Chemistry – Interscience Publisher – New York).

Les caractéristiques des colloïdes dépendent évidemment des autres paramètres.

Avantageusement, on met en œuvre un silicate de rapport pondéral $SiO_2/Na_2O$ compris entre 2 et 4.

Un facteur important réside dans le temps de séjour dans le volume constant. On observe que la taille des particules dépend du temps de séjour et augmente avec celui-ci.

Un autre facteur important est la durée de réaction.

La demanderesse a observé qu'il y avait établissement d'un régime stationnaire au bout d'un certain temps, après le début du soutirage.

Lorsque l'état stationnaire est atteint, il n'existe plus de différence entre les deux types de colloïdes et on obtient un colloïde polydisperse présentant des billes qui peuvent être de tailles très élevées. Dans ce dernier cas, on obtient au moins une fraction de billes qui doivent être considérées comme de la silice de type sphérique et qui, en particulier, sont aptes à sédimenter.

Le concept de l'invention s'étend donc également à un procédé pour l'obtention de billes de silice.

Ce procédé consiste à faire réagir une solution d'un silicate alcalin avec un agent acidifiant, en formant un pied de cuve avec une substance aqueuse et en procédant, ensuite, en continu, à une addition simultanée d'un agent acidifiant et d'une solution de silicate de sodium et se caractérise par le fait que:

a) dans la première étape, on introduit les réactifs dans un réacteur jusqu'à établir un régime stationnaire de concentration en silice

b) puis on maintient ce régime en jouant sur l'introduction des réactifs et/ou leur évacuation

c) on filtre, lave et sèche le produit obtenu.

Selon une forme de réalisation simple, on commence l'évacuation du milieu réactionnel dès le début de l'étape (a) ou, si on préfère, on choisit le volume initial du pied de cuve égal au volume constant du régime stationnaire.

De manière inattendue, on s'aperçoit que le régime de concentration stationnaire en silice s'établit de lui-même; il suffit ensuite de poursuivre l'alimentation en continu des réactifs, dans les conditions du régime stationnaire.

La concentration en silice dans le colloïde doit être telle que l'agglomération de particules colloïdales soit évitée. La température est avantageusement comprise entre 50 et 100 °C.

Les facteurs à prendre en considération sont les mêmes que précédemment.

La solution de silicate alcalin est notamment de sodium de Rp (rapport pondéral) compris entre 2 et 4.

L'agent acidifiant peut être gazeux ($CO_2$) ou liquide (notamment $H_2SO_4$).

Le pied de cuve peut être constitué par de l'eau pure, mais aussi par une solution de silicate alcalin ou par un sol.

La concentration initiale en silicate correspond à celle généralement utilisée dans la fabrication de silices précipitées.

La température et le temps de séjour dépendent des caractéristiques du produit que l'on veut obtenir.

Il en va de même d'autres facteurs tels que l'agitation.

Le procédé selon l'invention peut être mis en œuvre très simplement dans un réacteur agité, à débordement (muni d'un tropplein).

On peut choisir tout moyen équivalent et adapter ce réacteur en fonction notamment de la forme des réactifs (gazeux ou liquides).

L'invention conduit ainsi à une variété de produits nouveaux:
- colloïdes monodisperses de facteur de forme sphérique et de diamètre moyen compris entre 10 et 100 nm et de facteur de polydispersité compris entre 1 et 1,2
- colloïdes polydisperses de facteur de forme sphérique de diamètre moyen compris entre 10 et 100 nm et d'indice de polydispersité supérieur à 1,2 et plus particulièrement compris entre 1,2 et 4
- silices se présentant sous forme de billes sphériques, de tailles élevées, généralement supérieures à 50 nm et pouvant aller jusqu'à 300 nm, voire au-delà.

Mais la présente invention sera plus aisément comprise à l'aide de l'exemple suivant, donné à titre purement illustratif.

Dans les exemples, on a évalué le diamètre moyen en nombre dn et le diamètre moyen en poids dw et la polydispersité par le rapport dw/dn. dw et dn sont calculés comme indiqué par Joseph T. BAILEY et Al. (Average Quantities in Colloïd Science Journal of Chemical Education – Volume 39, N° 4, April 1962, p. 196–200).

Par ailleurs, on a récapitulé au tableau ci-après les temps de séjour moyens, les températures et les temps de réaction.

| Exemple | Temps(*) de Séjour | Température °C | Début de Soutirage (en minute) | Durée de Réaction |
|---|---|---|---|---|
| 1 | 1 h 10' | 90 | 10' | 1 h à 6 h |
| 2 | 1 h 10' | 90 | 10' | 1 h à 6 h |
| 3 | 1 h 25' | 80 | 25' | 1 h à 7 h |
| 4 | 1 h 10' | 80 | 10' | 2 h 30 |
| 5 | 1 h 12' | 80 | 12' | $1/2$ h à 3 h |
| 6 | 1 h | 90 | 1' | $1/2$ h à 4 h |
| 7 | 1 h | 90 | 2' | $1/2$ h à 2 h 30 |
| 8 | 1 h 10' | 90 | 1' | 2 h 30 |
| 9 | 20' | 80 | 1' | 1 h |
| 10 | 18' | 75 | 1' | 1 h |
| 11 | 30' | 80 | 1' | 1 h |
| 12 | 2 h 50' | 90 | 1' | 4 h 30 à 19 h |
| 13 | 20' | 80 | 1' | 4 h à 28 h |
| 14 | 18' | 75 | 1' | > 4 h |
| 15 | 2 h 50' | 90 | 1' | 24 h à 74 h |
| 16 | 2 h 50' | 90 | 1' | > 22 h |

(*) Le temps de séjour est défini par le rapport du volume réactionnel au début du soutirage sur la somme des débits des réactifs liquides introduits.

Exemples 1 à 8

On dispose d'un réacteur en acier inoxydable d'un volume égal à 20 litres muni d'un système de chauffage par double enveloppe et d'un système d'agitation par turbine (400 tr/min). Le réacteur comporte un système permettant d'assurer l'évacuation en continu du liquide réactionnel dès que le volume atteint une valeur de consigne fixée. Deux pompes doseuses permettent d'assurer l'alimentation des réactifs, solution aqueuse de silicate de sodium d'une part, et acide ou solution aqueuse d'acide d'autre part. Ces deux réactifs sont introduits au sein du liquide réactionnel en deux points distincts.

## Exemple 1

On introduit, dans le réacteur de 20 litres décrit ci-dessus, 8 l d'eau distillée que l'on porte à la température de 90 °C. On agite par l'intermédiaire de la turbine (vitesse de rotation 400 tours/minute). On introduit du silicate de sodium aqueux de rapport pondéral $SiO_2/Na_2O$ égal à 3,25 et contenant 40 g de $SiO_2$ par litre, à raison de 67 ml par minute, de façon à avoir un pied de cuve aqueux dont le pH est égal à 9 à 90 °C.

On procède à l'introduction simultanée:

– d'une solution aqueuse de silicate de sodium diluée (rapport pondéral $SiO_2/Na_2O = 3,25$; $[SiO_2] = 40$ g/l) à un débit de 67 ml par minute,

– d'une solution aqueuse d'acide sulfurique diluée contenant 17 g de $H_2SO_4$ par litre. Le débit de cette solution est régulé de façon à maintenir dans le milieu réactionnel un pH égal à $9 \pm 0,2$ à 90°. La valeur moyenne de ce débit est de 67 ml par minute.

Après 10 minutes d'alimentation simultanée des deux réactifs, le soutirage est mis en route de façon à maintenir dans le réacteur un volume constant égal à 9,3 litres. Le temps de séjour moyen dans le réacteur s'établit par suite à 70 minutes. On prépare ainsi un colloïde de silice sphérique monodisperse (colloïde A) et un colloïde de silice sphérique polydisperse (colloïde B).

## Préparation du colloïde A

Le colloïde A est présent dans le réacteur, l'examen par microscopie électronique à transmission et l'examen par diffusion de lumière montrent qu'il s'agit d'un colloïde sphérique monodisperse dont le diamètre moyen évolue avec le temps de réaction (compté à partir du début de l'addition simultanée) de la façon suivante, avant l'établissement du régime stationnaire.

| Temps de réaction | Diamètre moyen en nanomètres | | $SiO_2$ g/l |
|---|---|---|---|
| | En nombre dn | En poids dw | |
| 1 heure | 17,5 | 18,3 | |
| 2 heures | 22,2 | 22,6 | |
| 3 heures | 30,0 | 31,4 | |
| 4 heures | 38,3 | 39,3 | |
| 5 heures | 50,0 | 51,6 | |
| 6 heures | 62,1 | 62,9 | 23,5 |

## Préparation du colloïde B

On accumule le liquide réactionnel soutiré pendant 6 heures après le début du soutirage. La concentration en silice de ce produit réactionnel est de 19 g/l. L'examen par microscopie électronique à transmission et l'examen par diffusion de lumière montrent qu'il s'agit d'un colloïde sphérique polydisperse dont les diamètres s'échelonnent entre 8 nm et 80 nm.

## Exemple 2

On procède comme à l'exemple 1 mais on accumule le sol soutiré en plusieurs fractions réparties dans le temps, de façon à réaliser par mélange de certaines fractions en tout ou partie, un colloïde de silice polydisperse présentant un diamètre moyen en nombre et une polydispersité données (la polydispersité est le rapport du diamètre en poids sur le diamètre en nombre). On veut préparer une suspension de silice colloïdale sphérique présentant un diamètre moyen en nombre de 30 nm et un indice de polydispersité égal à 1,40. Le colloïde de silice soutiré en 6 heures est accumulé dans le temps de la façon suivante:

– une première fraction rassemble le colloïde de silice soutiré pendant 2 heures et 15 minutes, à partir du début du soutirage (Fraction I)

– une deuxième fraction rassemble le colloïde de silice soutiré entre 2 heures 15 minutes et 4 heures 30 minutes (Fraction II)

– une troisième fraction rassemble le colloïde de silice soutiré entre 4 heures 30 minutes et 6 heures (Fraction III).

On mélange 9,15 litres de la fraction I et 0,85 litre de la fraction II. L'examen par microscopie électronique à transmission du mélange obtenu et l'examen par diffusion de lumière montrent qu'il s'agit d'un colloïde de silice sphérique polydisperse dont les diamètres sont compris entre 12 et 60 nanomètres. Le diamètre moyen en nombre est de 31 nm et le diamètre en poids est de 44 nm. La concentration en silice est de 15 g par litre.

## Exemple 3

On procède comme pour l'exemple 1 mais en apportant les modifications suivantes aux conditions de réaction:

– on pratique la réaction à $78 \pm 1$ °C au lieu de 90 °C

– on procède au soutirage à partir de la 25ème minute après le début de l'alimentation simultanée en acide sulfurique aqueux et en silicate de sodium aqueux, de façon à maintenir dans le réacteur un volume réactionnel constant égal à 11,3 l. Le temps de séjour moyen dans le réacteur s'établit par suite à 84 minutes. On prépare ainsi un colloïde de silice monodisperse (colloïde A) et un colloïde sphérique de silice polydisperse (colloïde B) pendant la montée en régime.

## Préparation du colloïde A

Le colloïde A est présent dans le réacteur. L'examen par microscopie électronique à transmission et l'examen par diffusion de lumière montrent qu'il s'agit d'un colloïde sphérique monodisperse dont le diamètre évolue avec le temps de réaction (compté à partir du début de l'addition simultanée) de la façon suivante:

| Temps de réaction heures | Diamètre moyen en nanomètres | | $SiO_2$ g/l |
|---|---|---|---|
| | En nombre dn | En poids dw | |
| $^1/_2$ | 8,6 | 8,8 | 6,3 |

| Temps de réaction heures | Diamètre moyen en nanomètres En nombre dn | En poids dw | SiO$_2$ g/l |
|---|---|---|---|
| 1 | 11,3 | 12,2 | 10,3 |
| 2 | 17,1 | 18,0 | 14,9 |
| 3 | 23,2 | 24,9 | 17,3 |
| 4 | 30,0 | 30,9 | 18,7 |
| 5 | 39,7 | 40,3 | 19,7 |
| 6 | 51,2 | 51,7 | 21,5 |
| 7 | 69,4 | 69,6 | 22,4 |

Préparation du colloïde B

On accumule le liquide réactionnel soutiré entre 2 heures 30 minutes et 5 heures 30 minutes après le début du soutirage. L'examen par microscopie électronique à transmission et l'examen par diffusion de lumière montrent qu'il s'agit d'un colloïde sphérique polydisperse de diamètres s'échelonnant entre 15 nm et 55 nm.

Exemple 4

On procède comme à l'exemple 1 mais en apportant les modifications suivantes aux conditions de réaction:

— on pratique la réaction à 80 °C au lieu de 90 °C

— on utilise un silicate de sodium aqueux plus concentré, c'est-à-dire contenant 80 g de SiO$_2$ par litre (rapport pondéral SiO$_2$/Na$_2$O inchangé et égal à 3,25)

— on utilise un acide sulfurique aqueux contenant 34 g de H$_2$SO$_4$ par litre.

2 heures 30 minutes après le début de l'addition simultanée, on dispose:

— dans le réacteur d'un colloïde de silice contenant 37 g de SiO$_2$ par litre. L'examen par microscopie électronique à transmission et l'examen par diffusion de lumière montrent qu'il s'agit d'un colloïde sphérique monodisperse présentant un diamètre moyen en nombre de 23,5 nanomètres et un diamètre moyen en poids de 24,4 nanomètres

— du produit de réaction soutiré et accumulé depuis le début du soutirage pendant 2 heures 30 minutes. L'examen par microscopie électronique à transmission et l'examen par diffusion de lumière montrent qu'il s'agit d'un colloïde sphérique polydisperse de diamètres répartis entre 8 et 32 nanomètres.

Exemple 5

On procède comme à l'exemple 1 mais en apportant les modifications suivantes au mode opératoire:

— on pratique la réaction à 80 °C

— on utilise un silicate de sodium aqueux de rapport pondéral SiO$_2$/Na$_2$O égal à 3,8 contenant 80 g de SiO$_2$ par litre. Cette solution de silicate est introduite à raison de 67 ml par minute

— on utilise de l'acide sulfurique aqueux contenant 34,2 g de H$_2$SO$_4$ par litre. L'introduction de l'acide est régulée automatiquement de façon à maintenir le milieu réactionnel à pH 9 ± 0,2 (débit moyen égal 57 ml par minute).

Dans le réacteur, on forme un colloïde de silice. L'examen par microscopie électronique et l'examen par diffusion de lumière montrent qu'il s'agit d'un colloïde sphérique dont le diamètre moyen croît avec le temps de réaction, compté à partir du début de l'addition simultanée, de la façon suivante, avant l'établissement du régime stationnaire:

| Temps de réaction heures | Diamètre moyen en nanomètres En nombre dn | En poids dw | SiO$_2$ g/l |
|---|---|---|---|
| $^1$/$_2$ | 6,5 | 8,3 | 11 |
| 1 | 10 | 13,5 | 21 |
| 2 | 16,2 | 18,5 | 32 |
| 3 | 26,8 | 30,5 | 37 |

Exemple 6

On procède comme à l'exemple 1 mais en apportant les modifications suivantes au mode opératoire:

— on utilise un silicate de sodium aqueux contenant 40 g de SiO$_2$ par litre et de rapport pondéral SiO$_2$/Na$_2$O égal à 3,8. Cette solution est introduite à un débit moyen de 65 ml par minute

— le soutirage commence 1 minute environ après le début de l'addition simultanée de la solution d'acide et de silicate. Lors de celle-ci, le pH du milieu réactionnel est maintenu à 8,9 ± 0,1 à 90 °C, par introduction régulée automatiquement de l'acide sulfurique aqueux ([H$_2$SO$_4$] = 17 g/l). Le temps de séjour moyen dans le réacteur est de 60 minutes.

Dans le réacteur, on forme un colloïde de silice. L'examen par microscopie électronique et l'examen par diffusion de lumière montrent qu'il s'agit d'un colloïde sphérique dont le diamètre moyen croît avec le temps de réaction, compté à partir du début de l'addition simultanée, de la façon suivante, avant l'établissement du régime stationnaire:

| Temps de réaction heures | Diamètre moyen en nanomètres En nombre dn | En poids dw | SiO$_2$ g/l |
|---|---|---|---|
| $^1$/$_2$ | 9,7 | 11,3 | 8,1 |
| 1 | 11,2 | 12,7 | 14,1 |
| 2 | 20,7 | 27,4 | 19 |
| 3 | 30,4 | 32,4 | 23 |
| 4 | 42,3 | 43,8 | 24 |

Le produit de réaction accumulé en 4 heures de soutirage est un colloïde sphérique de silice dont les diamètres sont compris pour l'essentiel entre 8 et 50 nanomètres.

## Exemple 7

Cet exemple illustre le recours à l'anhydride carbonique comme acide. On introduit dans le réacteur précédemment décrit 8 litres d'eau distillée que l'on porte à 90 °C. On agite par l'intermédiaire de la turbine (vitesse de rotation 400 tours/minutes) et on amène le pH à 9,2 par introduction d'une solution aqueuse de silicate de sodium (rapport pondéral $SiO_2/Na_2O$ = 3,25, $[SiO_2]$ = 20 g/l).

Dans la sulution ainsi préparée, on introduit de façon simultanée:

- une solution de silicate de sodium aqueux de rapport pondéral $SiO_2/Na_2O$ égal à 3,25 contenant 20 g/l de $SiO_2$ par litre à raison de 135 ml par minute

- l'anhydride carbonique pur à un débit tel que le pH du milieu réactionnel soit compris entre 9,2 et 9,6 à 90 °C. Le débit moyen est de 37 g par heure.

On réalise ainsi dans le réacteur la formation et la croissance d'un colloïde sphérique de silice dont le diamètre moyen évolue avec le temps de réaction, de la façon suivante, avant l'établissement du régime stationnaire:

| Temps de réaction heures | Diamètre moyen en nanomètres | | $SiO_2$ g/l |
|---|---|---|---|
| | En nombre dn | En poids dw | |
| $^1/_2$ | 10 | — | |
| 1 | 15,3 | 15,7 | |
| 2 | 21,3 | 21,4 | |
| 2,5 | 28,9 | 29,3 | 22 |

Le colloïde sphérique de silice présent dans le réacteur entre t = 0 et t = 2 h 30 présente un caractère monodisperse particulièrement accentué: 80% des diamètres sont compris entre 25 et 30 nanomètres.

## Exemple 8

On procède comme décrit à l'exemple 1 mais en apportant les modifications suivantes au mode opératoire:

- on utilise comme acide une solution aqueuse d'acide nitrique contenant 22 g de $HNO_3$ par litre

- on met en route le soutirage 1 minute après le début de l'introduction simultanée de l'acide et du silicate.

Après 2 heures 30 minutes, le réacteur contient un colloïde de silice à la concentration de 19 g de $SiO_2$ par litre. L'examen par microscopie électronique et l'examen par diffusion de lumière montrent qu'il s'agit d'un colloïde sphérique monodisperse dont le diamètre moyen en nombre est égal à 24 nanomètres et le diamètre moyen en poids est égal à 25 nanomètres.

Pour les exemples 9, 10 et 11

On utilise un réacteur inoxydable de 1 litre muni d'un système d'agitation par turbine (1.000 tr/min) et d'un système de chauffage. Ce réacteur comporte un système d'évacuation en continu du liquide réactionnel, de façon à maintenir un volume réactionnel constant et égal à 0,8 l. Deux pompes doseuses permettent d'assurer l'alimentation des réactifs au sein du liquide réactionnel, en deux points nettement distincts. Ces deux réactifs sont:

- d'une part du silicate de sodium aqueux de rapport pondéral $SiO_2/Na_2$ = 3,25 contenant 50 g de $SiO_2$ par litre

- d'autre part une solution aqueuse d'acide sulfurique contenant 22,8 g de $H_2SO_4$ par litre.

## Exemple 9

On introduit dans le réacteur de 1 l décrit ci-dessus 0,8 l d'eau distillée que l'on porte à 80 °C. On agite par l'intermédiaire de la turbine (1.000 tours par minute) et on procède à l'introduction simultanée:

- de la solution de silicate à un débit de 20 ml par minute

- de la solution aqueuse sulfurique à un débit régulé automatiquement de façon à maintenir dans le milieu réactionnel le pH 8,7 ± 0,2. Le débit moyen de la solution d'acide sulfurique aqueux est de 20 ml par minute.

La température de réaction est maintenue à 80 °C.

Le soutirage en continu se produit dès l'introduction simultanée des deux réactifs: dans ces conditions, le temps de séjour moyen dans le réacteur est égal au rapport du volume réactionnel sur la somme des débits moyens des réactifs, soit 0,8 litre/0,04 litre par minute = 20 minutes.

Après 1 heure de fonctionnement, le réacteur contient 0,8 l de silice colloïdale ($[SiO_2]$ = 23 g/l). L'examen par microscopie électronique et l'examen par diffusion de lumière montrent qu'il s'agit de particules sphériques de silice colloïdale monodisperse en diamètre. Les diamètres des particules sont compris entre 25 et 30 nm.

## Exemple 10

On procédé comme indiqué à l'exemple 9 mais avec les modifications suivantes:

- on pratique la réaction à 75 °C

- on introduit la solution aqueuse de silicate de sodium à un débit moyen de 21,9 ml par minute

- on introduit la solution aqueuse d'acide sulfurique à un débit moyen de 21,9 ml par minute.

Le temps de séjour moyen dans le réacteur est de 18 minutes.

Après 1 heure de fonctionnement, le réacteur contient 0,8 l de silice colloïdale ($[SiO_2]$ = 23 g/l). L'examen par microscopie électronique et l'examen par diffusion de lumière montrent qu'il s'agit de particules sphériques de silice colloïdale monodisperse en diamètre. Les diamètres sont compris entre 20 et 25 nm.

Exemple 11

On procède comme indiqué à l'exemple 9 mais avec les modifications suivantes:
– on introduit la solution aqueuse de silicate de sodium à un débit moyen de 13,3 ml par minute
– on introduit la solution aqueuse d'acide sulfurique à un débit moyen de 13,3 ml par minute, de façon à maintenir le milieu réactionnel à pH = 8,7 ± 0,2.

Le temps de séjour moyen dans le réacteur est de 30 minutes. Après 1 heure de fonctionnement, le réacteur contient 0,8 l de silice colloïdale. L'examen par microscopie électronique à transmission et l'examen par diffusion de lumière montrent qu'il s'agit de particules sphériques de silice colloïdale monodisperse en diamètre. Les diamètres des particules sont compris entre 12 et 15 nanomètres.

Exemple 12

On utilise un réacteur en acier inoxydable d'un volume de 300 ml muni d'un système d'agitation à turbine et d'un système de chauffage. Ce réacteur présente en sa partie supérieure une canalisation assurant par débordement l'évacuation, de façon continue, du liquide réactionnel dès que le volume de celui-ci dépasse 250 ml. On introduit dans le réacteur 250 ml d'eau permutée, on porte la température à 90 °C. On agite par l'intermédiaire de la turbine (vitesse 1200 tr/min) et on procède à l'introduction simultanée en deux points distincts, au sein du liquide:
– d'une solution aqueuse de silicate de sodium de rapport pondéral $SiO_2/Na_2O$ = 3,4 contenant 40 g de $SiO_2$ par litre. Cette solution est introduite de façon continue à raison de 45 ml par heure
– d'une solution aqueuse d'acide sulfurique contenant 17,1 g d'acide sulfurique par litre, introduite de façon continue à raison de 45 ml par heure.

Le pH du milieu réactionnel est de 9 ± 0,2 à 90 °C.

Le temps de séjour moyen dans le réacteur est de 2 heures 50 minutes.

L'examen du liquide réactionnel, présent dans le réacteur, par microscopie électronique et par diffusion de lumière, montre qu'il s'agit d'un colloïde de silice sphérique monodisperse dont la taille évolue de la façon suivante, avec le temps de réaction, avant l'établissement du régime stationnaire:

| Temps de réaction | Intervalle de diamètres du Colloïde |
|---|---|
| 4 h 30 min. | 15 à 20 nanomètres |
| 6 h 30 min. | 30 à 40 nanomètres |
| 9 h | 50 à 60 nanomètres |
| 16 h | 90 à 110 nanomètres |

On réalise ainsi, de façon effective, la formation et la croissance en diamètre d'un colloïde silicique sphérique, dans un large domaine de tailles.

Exemple 13

On réalise de façon continue la formation d'un colloïde sphérique de silice. Les caractéristiques de ce colloïde sont les suivantes: concentration en $SiO_2$ égale à 25 g par litre, diamètre des particules compris entre 20 et 70 nanomètres. Pour cela, on procède à l'introduction de réactifs et au soutirage du produit réactionnel comme décrit à l'exemple 9 (temps de séjour moyen égal à 20 minutes) mais on poursuit la réaction dans le temps après 1 heure. Après 4 heures de fonctionnement, on atteint le régime stationnaire: la concentration en silice dans le réacteur et les caractéristiques du colloïde formé n'évoluent plus, comme le montrent l'examen par microscopie électronique et l'examen par diffusion de lumière du produit de réaction, effectués à intervalles réguliers entre la 4ème heure et la 28ème heure de fonctionnement.

Le colloïde de silice préparé ainsi de façon continu est constitué de particules sphériques dont les diamètres sont répartis, à chaque instant, entre 20 et 70 nanomètres.

Exemple 14

On réalise de façon continue la formation d'un colloïde sphérique de silice présentant les caractéristiques suivantes: concentration en $SiO_2$ égale à 25 g par litre, diamètres des particules échelonnés entre 10 et 50 nanomètres.

Pour ce faire, on procède à l'introduction des réactifs et au soutirage du produit réactionnel comme décrit à l'exemple 10 (temps de séjour moyen = 18 minutes), mais on poursuit la réaction dans le temps après 1 heure. Après 4 heures de fonctionnement, on atteint le régime stationnaire: la concentration en silice dans le réacteur et les caractéristiques du colloïde formé n'évoluent plus comme le montrent l'examen par microscopie électronique et l'examen par diffusion de lumière du produit de réaction, effectués à intervalles réguliers entre la 4ème heure et la 100ème heure de fonctionnement.

Le colloïde de silice préparé ainsi de façon continue est constitué de particules sphériques dont les diamètres sont répartis, à chaque instant, entre 10 et 50 nanomètres. Le diamètre moyen en nombre est de 19 nm. L'indice de polydispersité est de 1,7.

Exemple 15

On prépare de façon continue une suspension de silice sphérique présentant les caractéristiques suivantes: concentration en $SiO_2$ égale à 15 g par litre, diamètres des particules compris pour l'essentiel de la population entre 50 et 250 nanomètres.

Pour ce faire, on introduit dans le réacteur de 300 ml décrit à l'exemple 12, 250 ml d'eau distillée; on porte la température à 90 °C. On agite par l'intermédiaire de la turbine (vitesse de rotation 1200 tours/minute) et on procède à l'addition simultanée:

— d'une solution aqueuse de silicate de sodium siluée de rapport $SiO_2/Na_2O = 3,4$; $[SiO_2] = 30$ g/l, introduite de façon continue, à raison de 45 ml par heure

— d'une solution aqueuse d'acide sulfurique ($H_2SO_4 = 12,8$ g/l) introduite de façon continue, à raison de 45 ml par heure.

Le pH du milieu réactionnel est de $9 \pm 0,2$ à 90 °C.

Le produit de la réaction est soutiré de façon continue et est amené rapidement à température ambiante. Le temps de séjour moyen dans le réacteur est de 2 heures 50 minutes.

Après 18 heures de réaction environ, on atteint le régime stationnaire: les caractéristiques morphologiques de la suspension formée varient ensuite peu avec le temps de réaction. La suspension sédimente en l'absence d'agitation.

On recueille la suspension de silice produite entre la 20ème et la 78ème heures. On réalise des prélèvements à la 24ème heure et à la 78ème heure; on filtre, lave et sèche le produit.

Les caractéristiques des silices formées à 24 heures et à 78 heures sont les mêmes:

— surface spécifique mesurée par adsorption de bromure de cétyltriméthylammonium à pH = 9 (C.T.A.B.) = 30 $m^2$/g

— l'examen par microscopie électronique à transmission et l'examen par diffusion de lumière indiquent qu'il s'agit de particules sphériques de diamètres compris, pour l'essentiel de la population entre 50 et 250 nanomètres.

Exemple 16

On prépare de façon continue des particules de silice sphérique de diamètre compris entre 50 et 300 nanomètres. Le pied de cuve initial est constitué par le produit de réaction d'acide sulfurique dilué et de silicate de sodium aqueux.

On utilise le même réacteur que pour l'exemple 12. On introduit dans ce réacteur 192 ml d'eau distillée, puis 3,1 ml de silicate de sodium aqueux concentré de rapport pondéral $SiO_2/Na_2O = 3,4$ contenant 370 g de $SiO_2$ par litre.

On forme ainsi une solution de silicate dilué contenant 5,7 g/l de $SiO_2$. Cette solution est portée sous agitation à 90 °C. On introduit ensuite de l'acide sulfurique dilué $H_2SO_4 = 17,1$ g/l, à raison de 1,7 ml par minute et pendant 15 minutes.

Après ce temps, on arrête l'introduction d'acide et on laisse mûrir la solution pendant 30 minutes sous agitation (turbine à 1200 tours par minute). On procède ensuite à l'addition simultanée:

— d'une solution aqueuse de silicate de sodium siluée de rapport $SiO_2/Na_2O = 3,4$; ($[SiO_2] = 40$ g/l), introduite de façon continue, à raison de 45 ml par heure

— d'une solution aqueuse d'acide sulfurique ($[H_2SO_4] = 17,1$ g/l) introduite de façon, à raison de 45 ml par heure.

Le pH du milieu réactionnel est de $8,7 \pm 0,2$ à 90 °C.

Le produit de réaction est soutiré de façon continue et est amené rapidement à température ambiante. Le temps de séjour moyen dans le réacteur est de 2 heures 50 minutes.

Après 22 heures de réaction environ, on atteint le régime stationnaire: les caractéristiques morphologiques de la suspension formée ($[SiO_2] = 20$ g/l) varient ensuite peu avec le temps de réaction. La suspension sédimente en l'absence d'agitation.

On procède à deux prélèvements aux 23ème heure et 27ème heure. Après filtration et lavage par de l'eau distillée, on obtient un gâteau de silice que l'on sèche à l'étuve. Les poudres de silice obtenues présentent les mêmes caractéristiques suvantes:

— surface spécifique CTAB = 28 $m^2$/g

— surface spécifique BET = 28 $m^2$/g

L'examen par microscopie électronique à transmission et l'examen par diffusion de lumière indiquent que la silice est constituée de particules sphériques dont l'essentiel de la population présente un diamètre compris entre 50 et 300 nanomètres.

**Revendications**

1. Procédé d'obtention de colloïde de silice par réaction d'une solution d'un silicate alcalin avec un agent acidifiant en formant un pied de cuve renfermant une substance aqueuse par addition simultanée d'un agent acidifiant et de la solution de silicate alcalin, caractérisé par le fait que l'on réalise cette addition à volume constant des réactifs et soutirage en continu du milieu de réaction et en maintenant une concentration en silice dans le milieu de réaction telle que l'agglomération de particules colloïdales soit évitée.

2. Procédé selon la revendication caractérisé en ce que la température du milieu de réaction est comprise entre 50 et 100 °C.

3. Procédé d'obtention d'une silice par réaction d'une solution d'un silicate alcalin avec un agent acidifiant, en formant un pied de cuve avec une substance aqueuse et en procédant, ensuite, en continu, à une addition simultanée d'un agent acidifiant et d'une solution de silicate de sodium, caractérisé par le fait que:

a) dans la première étape, on introduit les réactifs dans un réacteur jusqu'à l'établissement d'un régime stationnaire de concentration en silice,

b) dans une deuxième étape, on maintient ce régime stationnaire en jouant sur l'introduction des réactifs et/ou leur évacuation.

c) on filtre, lave et sèche le produit obtenu.

4. Procédé selon la revendication 3, caractérisé par le fait que la concentration en silice est telle que l'on évite l'agglomération de particules colloïdales et que la température est comprise entre 50 et 100 °C.

**Patentansprüche**

1. Verfahren zur Darstellung von Siliziumdioxid-Kolloid durch Reaktion einer Lösung eines Alkalisilikates mit einem Säuerungsmittel durch gleichzeitige Einleitung eines Säuerungsmittels und der Alkalisilikatlösung in eine eine wässrige Substanz enthaltende Vorlage, dadurch gekennzeichnet, dass dieses Hinzufügen bei konstantem Volumen der Reagenzien und kontinuierlicher Entnahme des Reaktionsgemisches und unter Aufrechterhaltung einer Siliziumdioxidkonzentration im Reaktionsgemisch bei einem Wert, bei dem die Zusammenballung der Kolloidteilchen vermieden wird, erfolgt.

2. Verfahren nach Patentanspruch 1, dadurch gekennzeichnet, dass die Temperatur des Reaktionsgemisches zwischen 50 und 100 °C liegt.

3. Verfahren zur Darstellung eines Siliziumdioxids durch Reaktion einer Lösung eines Alkalisilikates mit einem Säuerungsmittel unter Herstellung einer Vorlage mit einer wässrigen Substanz und unter anschliessender kontinuierlicher Zufuhr eines Säuerungsmittels und einer Natriumsilikatlösung, dadurch gekennzeichnet, dass

a) in der ersten Stufe die Reagenzien bis zur Herstellung eines stationären Zustandes der Siliziumdioxidkonzentration in einen Reaktor geleitet werden,

b) in einer zweiten Stufe dieser stationäre Zustand durch Regelung der Einleitung der Reagenzien und/oder der Entnahme aufrechterhalten wird,

c) das erhaltene Produkt filtriert, gewaschen und getrocknet wird.

4. Verfahren nach Patentanspruch 3, dadurch gekennzeichnet, dass die Siliziumdioxidkonzentration einen Wert hat, bei dem die Zusammenballung der Kolloidteilchen vermieden wird, und die Temperatur zwischen 50 und 100 °C liegt.

**Claims**

1. A process for producing silica colloid by the reaction of a solution of an alkali metal silicate with an acidifying agent by forming a bottoms material containing an aqueous substance by the simultaneous addition of an acidifying agent and the solution of alkali metal silicate characterised by effecting said addition of the reactants at constant volume and continously drawing off the reaction medium and while maintaining a concentration of silica in the reaction medium such as to avoid the agglomeration of colloidal particles.

2. A process according to the claim characterised in that the temperature of the reaction medium is between 50 and 100 °C.

3. A process for producing a silica by the reaction of a solution of an alkali metal silicate with an acidifying agent, by forming a bottoms material with an aqueous substance and then continously effecting simultaneous addition of an acidifying agent and a sodium silicate solution, characterised in that:

a) in the first step the reactants are introduced into a reactor until a stable state in regard to the concentration of silica is established,

b) in a second step said stable state is maintained by controlling the introduction of the reactants and/or the removal thereof, and

c) the product obtained is filtered, washed and dried.

4. A process according to claim 3 characterised in that the silica concentration is such as to avoid the agglomeration of colloidal particles and that the temperature is between 50 and 100 °C.